Europäisches Patentamt

European Patent Office

Office européen des brevets

(11) Veröffentlichungsnummer : **0 053 414**
B1

(12) **EUROPÄISCHE PATENTSCHRIFT**

(45) Veröffentlichungstag der Patentschrift :
15.05.85

(21) Anmeldenummer : 81201256.5

(22) Anmeldetag : 10.11.81

(51) Int. Cl.⁴ : **B 60 L 9/22**, B 60 L 7/14, H 02 P 7/74

(54) Schaltungsanordnung zur Umgruppierung mehrerer Antriebseinheiten.

(30) Priorität : 27.11.80 CH 8795/80

(43) Veröffentlichungstag der Anmeldung :
09.06.82 Patentblatt 82/23

(45) Bekanntmachung des Hinweises auf die Patenterteilung : 15.05.85 Patentblatt 85/20

(84) Benannte Vertragsstaaten :
CH DE FR IT LI

(56) Entgegenhaltungen :
DE-A- 2 016 519
DE-A- 2 521 940
AUTOMATION, Band 11, Nr. 5, Mai 1964, Cleveland, US, C.D. HELMICK "Applying adjustable frequency inverters", Seiten 66-69

(73) Patentinhaber : BBC Aktiengesellschaft Brown, Boveri & Cie.
Haselstrasse
CH-5401 Baden (CH)

(72) Erfinder : Seger, Thomas
Rheinhalde 12
D-7891 Hohentengen (DE)

Jouve, 18, rue St-Denis, 75001 Paris, France

## Beschreibung

Die Erfindung bezieht sich auf eine Schaltungsanordnung zur Fahr/Brems-Umgruppierung von wenigstens zwei Antriebseinheiten mit Asynchronmotoren nach dem Oberbegriff des Patentanspruchs 1.

Allgemein gewinnt der Einsatz von Drehstrom-Asynchronmotoren in Antrieben zunehmend an Bedeutung. Seit längerer Zeit wird nun versucht, Kommutatormotoren, insbesondere in Traktionsantrieben durch Drehstrom-Asynchronmotoren zu ersetzen. Die notwendige 3-phasige Einspeisung sowie die Frequenzsteuerung von Asynchronmotoren erforderte jedoch einen relativ hohen schaltungstechnischen Aufwand. Die Anforderung an Thyristor-Gleichstromstelleranlagen zur Steuerung von Motoren elektrischer Triebfahrzeuge des öffentlichen Personen-Nahschnellverkehrs sind bekannt (VÖV Schriften, Verband öffentlicher Verkehrsbetriebe, Reihe Technik VÖV 6 325 2, Februar 1975, Leistungselektronik S. 3-7).

In modernen Nahverkehrsbahnen sind meist 2 Antriebseinheiten eingebaut, welche durch getrennte Phasenfolge-Wechselrichter mit eingeprägtem Zwischenkreisstrom Drehstrom-Asynchronmotoren steuern.

Eine Anordnung gemäss dem Oberbegriff des Patentanspruchs 1 ist bekannt (Elektrische Bahnen, 1980, H.6, S. 152, Bild 1). Ein dort beschriebener, selbstgeführter Wechselrichter lässt auf der Gleichstromseite nur jeweils eine Stromrichtung zu. Im Zustand des Bremsens des Antriebs wechselt jedoch das Vorzeichen der Eingangsspannung, so dass eine Umgruppierung über eine Rückspeisediode, welche durch einen mechanischen Schalter in den Stromkreis eingeschaltet wird, vorgesehen ist. Dieser Schalter wird bei Beginn des Bremsvorgangs unter Last geöffnet, d. h. bei den meisten Ausführungen wird der Magnetisierungsstrom der Maschine unterbrochen. Es entsteht daher aufgrund der hohen Kontaktbelastung ein grosser Verschleiss und dementsprechend ein beträchtlicher Wartungsaufwand. In Traktionsantrieben mit mehreren Antriebseinheiten wurde bisher jede Antriebseinheit separat umgruppiert. Die Erfindung, wie sie im Patentanspruch 1 definiert ist, löst die Aufgabe, den schaltungstechnischen Aufwand und damit auch den Wartungsaufwand bei der Umgruppierung von wenigstens zwei Antriebseinheiten zu verringern.

Die erfindungsgemässe Lösung stellt einen Beitrag an die Sicherheit von Antriebssystemen, insbesondere an die Verkehrssicherheit von Traktionsantrieben dar.

In den nachfolgenden Ansprüchen sind vorteilhafte Weiterbildungen beschrieben. Durch ein zum Schalter parallel geschaltetes Ventil (Thyratron, Thyristor) gemäss Anspruch 2, kann der Schaltzeitpunkt exakt vorgegeben werden.

Die Ausführung nach Anspruch 3 gibt den Vorteil eines kontaktlosen Schalters, und somit der Wartungsfreiheit.

Die Ausgestaltung mit einem fremdgeladenen Löschkreis entsprechend Anspruch 4, erlaubt eine Optimierung des Betriebsverhaltens beim Bremsen.

Nachfolgend wird anhand von schematischen Zeichnungen die Erfindung näher beschrieben. Dabei zeigen

Figur 1 eine Schaltungsanordnung zur Fahr/Brems-Umgruppierung mit zwei Antriebseinheiten,

Figur 2 eine zu Fig. 1 weiterentwickelte Schaltungsanordnung mit einer vollelektronischen, kontaktlosen Umgruppierung und

Figur 3 eine Schaltungsanordnung zur Fahr/Brems-Umgruppierung inklusive Gleichstromsteller mit Löscheinrichtung und Netzfilter.

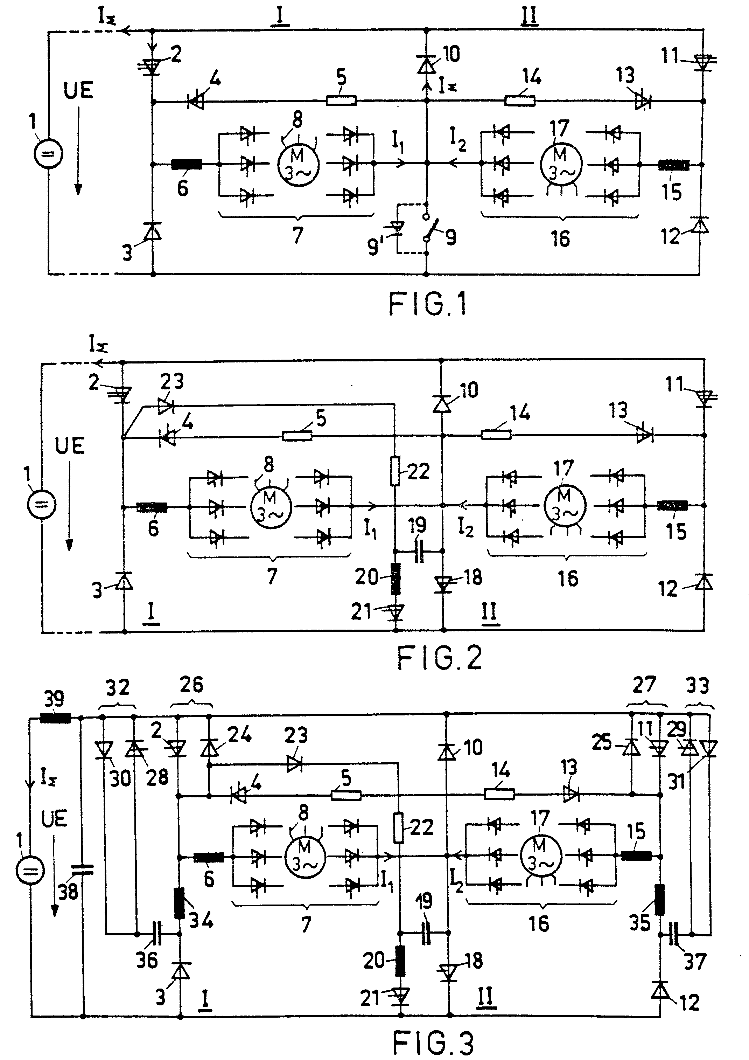

In Fig. 1 ist mit 1 eine Gleichstromquelle bezeichnet. Diese Gleichstromquelle 1 symbolisiert ein Fahrleitungsnetz eines Nahverkehrsbetriebs. Die Quellenspannung ist mit UE bezeichnet. Parallel zur Quelle 1 sind zwei Antriebseinheiten I, II eines Zugfahrzeugs angeschlossen. Die beiden Antriebseinheiten sind in an sich bekannter Weise ausgestaltet und weisen je einen Zerkacker-Thyristor 2, 11 (Gleichstromsteller) mit zugehörigen Freilaufdioden 3, 12 auf. Zu jedem Antriebsmotor 8, 17 (3-Phasen-Asynchronmotor) gehört ein selbstgeführter Phasenfolge-Wechselrichter 7, 16. Vom entsprechenden Zwischenkreis sind die Zwischenkreisdrosseln 6, 15 eingezeichnet. Die Wechselrichter 7, 16 sind in einer notorisch bekannten Thyristor-Brückenschaltung ausgeführt. Parallel zu den Wechselrichtern 7, 16 sind in Serie je ein Bremssteuerungs-Thyristor 4, 13 mit zugehörigem Bremswiderstand 5, 14 geschaltet.

Beiden Antriebseinheiten I, II sind eine Rückspeisediode 10 und ein mechanischer Schalter 9 gemeinsam.

Die Wirkungsweise dieser Schaltungsanordnung im Fahrbetrieb ist bekannt: Der Energiefluss führt von der Quelle 1 zu den Fahrmotoren 8, 17; die Kontakte des Schalters 9 sind dabei geschlossen. Die beiden Antriebseinheiten I, II sind über ihre Gleichstromsteller, die Zerhacker-Thyristoren 2, 11 steuerungstechnisch miteinander synchronisiert.

Die Verbindung beider Antriebseinheiten I, II über den gemeinsamen Schaltzweig, den Schalter 9 und die Rückspeisediode 10, beeinträchtigt die Funktionsweise in keiner Weise.

Beim Uebergang in den Bremsbetrieb wird der Schalter 9 unter Last geöffnet. Dabei resultiert als Folge der Generatorwirkung der beiden Asynchronmotoren in den Antriebseinheiten I, II ein Rekuperationsstrom $I_1$ bzw. $I_2$ welcher als Summen-Rekuperationsstrom $I_\Sigma$ der Quelle 1 zufliesst.

Als Variante ist in Fig. 1 parallel zum mechanischen Schalter 9 gestrichelt ein zündbares Ventil 9' eingezeichnet. Dieses erlaubt den Schaltpunkt und damit den Rekuperationszeitpunkt exakt zu definieren.

In den nachfolgenden Zeichnungen sind gleiche Funktionsteile mit gleichen Bezugsziffern bezeichnet.

Im Unterschied zu Fig. 1 weist Fig. 2 einen vollelektronischen Schalter bestehend aus einem Schalt-Thyristor 18, einem Kondensator 19, einer Induktivität 20 und einem Hilfs-Thyristor 21 auf. Ausserdem sind zwischen der Kathode des Zerhacker-Thyristors 2 und der Verbindung zwischen dem Kondensator 19 und der Induktivität 20 ein Auflade-Widerstand 22 mit Sperrdiode 23 zwischengeschaltet.

Ueber die Sperrdiode 23 und den Auflade-Widerstand 22 wird im Fahrbetrieb der Kondensator 19 aufgeladen. Damit ist der Schalt-Thyristor 18 löschbereit. Durch Anlegen einer positiven Spannung an das Tor des Hilfs-Thyristors 21 wird dieser gezündet, wodurch der resultierende Hauptstrom über die Induktivität 20, den Kondensator 19 und die Rückspeisediode 10 geführt wird. Es fliessen nun die Rekuperationsströme $I_1$ und $I_2$.

Eine derartige Auslegung eines fremdgeladenen Löschkreises mittels des Kondensators 19 und der Induktivität 20 ermöglicht eine sehr wirtschaftliche Realisation. Aufgrund der sich einstellenden, relativ grossen Freihaltezeit des Schalt-Thyristors 18, genügt ein kostengünstiger Netz-Thyristor (50 Hz-Typ) ; der Kondensator 19 ist ein wirtschaftlicher Metallpapier-Kondensator.

Die in Fig. 3 gezeigte Schaltungsanordnung, wiederum mit zwei Antriebseinheiten I, II mit Gleichstromstellern weist zusätzlich einen Löschkreis sowie ein Netzfilter auf.

Antiparallel zu den Zerhacker-Thyristoren 2, 11 sind Rückladedioden 24 bzw. 25 geschaltet. Diese werden vorteilhafterweise als Baueinheit kombiniert und werden als rückwärtsleitende Thyristoren 26 bzw. 27 bezeichnet. Das selbe gilt auch für die rückwärtsleitenden Thyristoren 32 und 33, welche aus den Umschwing-Thyristoren 28, 29 und den ebenfalls antiparallel geschalteten Löschdioden 30, 31 bestehen. Die rückwärtsleitenden Thyristoren 26, 32 und 27, 33 weisen je einen Löschkreis bestehend aus den Induktivitäten 34 bzw. 35 und den Kondensatoren 36 bzw. 37 auf.

Da bekanntlich ein Gleichstromsteller Oberschwingungen erzeugt, ist ein LC-Filter bestehend aus einem Filter-Kondensator 38 und einer Filter-Drossel 39 parallel zum Netz geschaltet, um Störungen in anderen Antrieben zu verhindern.

Insbesondere die in den Fig. 2 und 3 aufgezeigten Schaltungsanordnungen stellen sehr wirtschaftliche Problemlösungen dar. Bei einer Wirtschaftlichkeitsbetrachtung muss berücksichtigt werden, dass nicht nur eine Einsparung an aktiven oder passiven Schaltelementen erzielt wird, sondern dass die zu deren Betrieb notwendigen mechanischen und elektrischen Hilfsaggregate, wie Kühlelemente, Chassis etc. ebenfalls wegfallen. Dies führt zu einer Verringerung des Raumbedarfs und erhöht die Wartungsfreundlichkeit, insbesondere in Traktionsantrieben.

Selbstverständlich ist der Erfindungsgegenstand nicht auf netzgespeiste Antriebe beschränkt ; er erweist sich ebenfalls für batteriegespeiste Antriebe in Elektrofahrzeugen und Arbeitsmaschinen als vorteilhaft. Der gemeinsame Schaltzweig, bestehend aus einer Rückspeisediode und einem Schalter, kann für an sich beliebig viele Antriebseinheiten eingesetzt werden.

## Patentansprüche

1. Schaltungsanordnung zur Fahr/Brems-Umgruppierung von wenigstens zwei Antriebseinheiten (I, II) mit Asynchronmotoren, insbesondere Drehstrom-Asynchronmotoren (8, 17) in einem Traktionsantrieb, wobei die Asynchronmotoren (8, 17) je über eine Brückenschaltung und einen in der Brückendiagonale liegenden selbstgeführten Wechselrichter (7, 16) von einer Gleichstromquelle (1) gespeist sind, wobei eine Brückenhälfte aus der Reihenschaltung eines in Richtung der Gleichspannung gepolten Zerhacker-Thyristors (2, 11) und einer entgegengesetzt gepolten Freilaufdiode (3, 12) besteht und die andere Brückenhälfte aus der Reihenschaltung einer entgegen der Gleichspannung gepolten Rückspeisediode (10) und einem im Bremsbetrieb offenen Schalter (9) besteht, dadurch gekennzeichnet, dass für jeweils zwei oder mehr Wechselrichter (7, 16) die zweiten Brückenhälften zu einem gemeinsamen Schaltzweig, bestehend aus einer gemeinsamen Rückspeisediode (10) und einem gemeinsamen Schalter (9'), zusammengefasst sind. (Fig. 1)

2. Schaltungsanordnung nach Anspruch 1, dadurch gekennzeichnet, dass zu einem mechanischen Schalter (9) ein zündbares Ventil (9') parallel geschaltet ist. (Fig. 1).

3. Schaltungsanordnung nach Anspruch 1, dadurch gekennzeichnet, dass der Schalter (9) ein zünd- und löschbares Ventil ist. (Fig. 2, 3).

4. Schaltungsanordnung nach Anspruch 3, dadurch gekennzeichnet, dass das zünd- und löschbare Ventil ein Schaltthyristor (18) ist, der von der Reihenschaltung eines Kondensators (19), einer Induktivität (20) und eines in gleicher Richtung gepolten Hilfsthyristors (21) überbrückt ist. (Fig. 2, 3).

## Claims

1. Circuit arrangement for regrouping for driving/braking of at least two drive units (I, II) comprising asynchronous motors, in particular three-phase asynchronous motors (8, 17) in a traction drive unit, the asynchronous motors (8, 17) each being fed via a bridge circuit and a self-controlled inverter (7, 16), located in the diagonal of the bridge, from a direct-current source (1), one half of the bridge consisting of chopper resistors (2, 11) connected in the direction of the direct-voltage in series with an oppositely polarised freewheeling diode (3, 12) and the other half of the bridge consisting of a feed back diode (10), polarised in the opposite direction of the direct voltage, connected in series with a switch (9) which is open in braking operation, characterised in that for two or more inverters (7, 16) in each case the two halves of the bridge are combined to a common switching branch consisting of a common feed back diode (10) and a common switch (9). (Figure 1).

2. Circuit arrangement according to Claim 1, characterised in that a rectifier (9') which can be fired is connected in parallel with a mechanical switch (9). (Figure 1).

3. Circuit arrangement according to Claim 1, characterised in that the switch (9) is a rectifier which can be fired and quenched. (Figures 2, 3).

4. Circuit arrangement according to Claim 3, characterised in that the rectifier which can be fired and quenched is a gate turn-off thyristor (18) which is by-passed by the series circuit of a capacitor (19), an inductance (20) and an auxiliary thyristor (21) which is connected in the same direction. (Figures 2, 3).

**Revendications**

1. Montage de circuit pour regrouper en vue de la marche et du freinage au moins deux unités d'entraînement (I, II) à moteurs asynchrones, en particulier à moteurs asynchrones triphasés (8, 17) dans un mécanisme de traction, étant entendu que les moteurs asynchrones (8, 17) sont alimentés chacun par l'intermédiaire d'un montage en pont et d'un onduleur à commutation automatique (7, 16) se trouvant dans la diagonale du pont à partir d'une source de courant continu (1), qu'une moitié du pont est formée du montage en série d'un thyristor à vibreur (2, 11) à polarité dans le sens de la tension continue et d'une diode de roue libre (3, 12) à polarité dans le sens opposé et que l'autre moitié du pont est formée du montage en série d'une diode d'alimentation en retour (10) à polarité dans le sens opposé à celui de la tension continue et d'un interrupteur (9) ouvert en service de frèinage, caractérisé en ce que pour chaque fois deux ou plus de deux onduleurs (7, 16), les secondes moitiés de ponts sont groupées en un branchement commun formé d'une diode d'alimentation inverse commune (10) et d'un interrupteur commun (9) (Fig. 1).

2. Montage de circuit suivant la revendication 1, caractérisé en ce qu'une valve (9') à allumage (9') est connectée en parallèle à un interrupteur mécanique (Fig. 1).

3. Montage de circuit suivant la revendication 1, caractérisé en ce que l'interrupteur (9') est une valve à allumage et extinction (Fig. 2, 3).

4. Montage de circuit suivant la revendication 3, caractérisé en ce que la valve à allumage et extinction est un thyristor de commutation (18) qui est ponté par le montage en série d'un condensateur (19), d'une inductance (20) et d'un thyristor auxiliaire (21) à polarité dans le même sens (Fig. 2, 3).

FIG.1

FIG.2

FIG.3